(19) **Europäisches Patentamt**

**European Patent Office**

**Office européen des brevets**

(11) Numéro de publication : **0 457 880 B1**

(12) **FASCICULE DE BREVET EUROPEEN**

(45) Date de publication du fascicule du brevet :
09.11.94 Bulletin 94/45

(51) Int. Cl.⁵ : **H01Q 19/28, H01Q 25/02**

(21) Numéro de dépôt : **91900846.6**

(22) Date de dépôt : **07.12.90**

(86) Numéro de dépôt international :
**PCT/FR90/00892**

(87) Numéro de publication internationale :
**WO 91/09435 27.06.91 Gazette 91/14**

(54) **ANTENNE IFF AEROPORTEE A DIAGRAMMES MULTIPLES COMMUTABLES.**

(30) Priorité : **08.12.89 FR 8916264**

(43) Date de publication de la demande :
**27.11.91 Bulletin 91/48**

(45) Mention de la délivrance du brevet :
**09.11.94 Bulletin 94/45**

(84) Etats contractants désignés :
**DE GB**

(56) Documents cités :
**EP-A- 0 021 251**
**EP-A- 0 172 626**
**FR-A- 2 196 527**
**GB-A- 1 471 860**
**Patent Abstracts of Japan,volume**
**12,no.440(E-684),18 November 1988,**

(73) Titulaire : **THOMSON-CSF**
**173, Boulevard Haussmann**
**F-75008 Paris (FR)**

(72) Inventeur : **DUBOIS, Serge**
**1, villa des Nonnains**
**F-78700 Conflans-Ste-Honorine (FR)**

(74) Mandataire : **Benoit, Monique et al**
**THOMSON-CSF**
**SCPI**
**B.P. 329**
**50, rue Jean-Pierre Timbaud**
**F-92402 Courbevoie Cédex (FR)**

**EP 0 457 880 B1**

## Description

La présente invention concerne une antenne IFF aéroportée fixe.

Par antenne aéroportée « fixe », on entendra une antenne non orientable fixée sur le fuselage de l'aéronef, généralement sous un radôme plat, par opposition aux antennes IFF à balayage, catégorie à laquelle n'appartient pas l'antenne de l'invention (qui cherche d'ailleurs à remédier à un certain nombre d'inconvénients propres à ces antennes à balayage).

Le document EP-A- 0.021.251 décrit un exemple de réalisation d'une antenne IFF fixe, intégrée à une antenne radar.

On connaît par ailleurs, du document EP-A- 0.172.626, dans le domaine des antennes de télécommunication terrestres, la réalisation d'une antenne à plusieurs brins, à savoir un monopole au centre d'une pluralité d'éléments disposés sur des cercles concentriques, dont la commutation permet d'augmenter la directivité du diagramme de l'antenne.

La technique IFF (Identification Friend or Foe : identification ami ou ennemi) opère à deux niveaux : transpondeur (mode « veille ») et interrogateur (mode « challenge »).

En l'absence d'indication sur la direction de la cible à identifier, il est nécessaire de prévoir en mode « veille » une couverture omnidirectionnelle, ce qui est généralement réalisé au moyen de deux éléments rayonnants dont le diagramme est, en azimut, omnidirectionnel, chacun des éléments rayonnants assurant, en site, une couverture sensiblement hémisphérique. L'un des éléments rayonnants est placé sur le dos et l'autre sur le ventre de l'appareil.

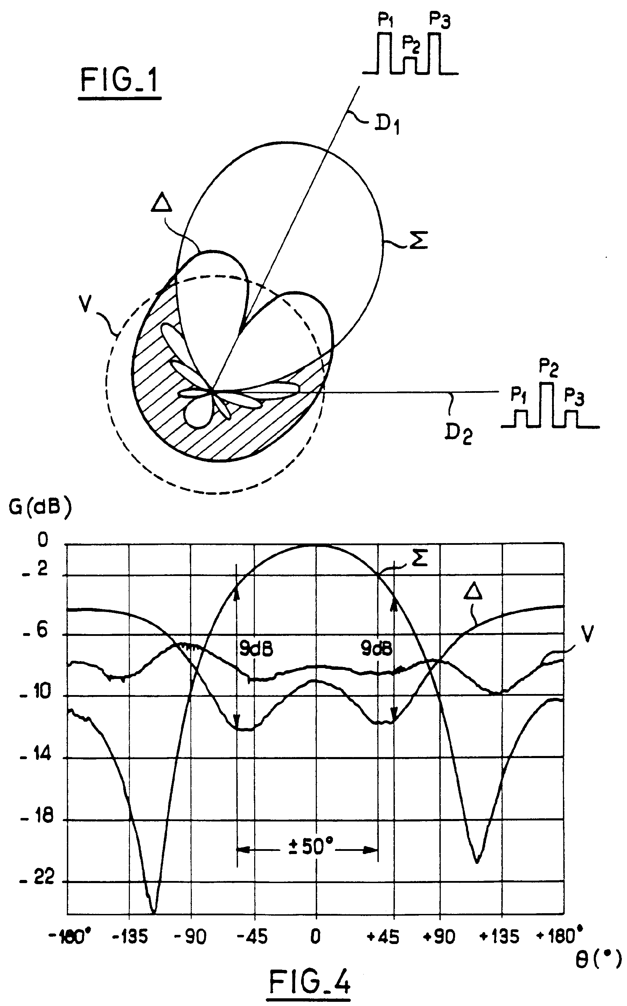

En phase d'interrogation/réponse (mode « challenge »), on utilise au contraire des antennes directives dont la couverture correspond approximativement à celle du balayage du radar de bord de l'aéronef. Ce diagramme, appelé « diagramme directionnel avant » ou « diagramme somme ($\Sigma$) » a été représenté en $\Sigma$ sur la figure 1 (on notera à ce propos que par « directionnel » on entendra un diagramme qui, par opposition à un diagramme omnidirectionnel, privilégie le secteur avant, même si l'angle d'ouverture de ce diagramme est relativement ouvert, typiquement de l'ordre de $\pm$ 50°, valeur correspondant sensiblement au secteur de balayage du radar de bord). Le diagramme V correspond au diagramme omnidirectionnel de veille.

Le diagramme directionnel avant est obtenu par des antennes supplémentaires, également au nombre de deux (dos + ventre), qui viennent donc s'ajouter aux deux antennes omnidirectionnelles de veille.

Par ailleurs, il existe actuellement deux normes IFF différentes, généralement désignées sous les termes de Eastern et Western, qui utilisent des bandes de fréquences distinctes, respectivement 600-700 MHz et 1030/1090 MHz.

Or, si l'on sait réaliser des éléments rayonnants omnidirectionnels bistandard, c'est-à-dire fonctionnant indifféremment dans les deux bandes de fréquences, tel n'est pas le cas pour les éléments rayonnants permettant d'obtenir le diagramme directionnel avant.

Si l'on veut donc que l'aéronef puisse utiliser l'une et l'autre des normes, il faudra prévoir un jeu d'antennes directives pour chacun d'entre elles, portant ainsi à six le nombre total d'antennes nécessaires pour pouvoir opérer indifféremment selon les deux normes.

Ceci est particulièrement pénalisant dans le cas des antennes aéroportées, du fait de la très grande difficulté de placer et d'installer les antennes en des endroits appropriés du fuselage.

Un premier but de l'invention est d'éviter cette multiplication des antennes, en proposant une antenne universelle unique permettant de réaliser sélectivement soit un diagramme omnidirectionnel (Eastern/Western), soit un diagramme directionnel Western, soit un diagramme directionnel Eastern.

On pourra ainsi réduire à deux (dos + ventre) le nombre total d'antennes que devra porter l'appareil, au lieu de six.

Un autre but de la présente invention est de permettre une discrimination améliorée des cibles à identifier.

En effet, en se référant à la figure 1, on voit que le diagramme directionnel avant $\Sigma$ présente un certain nombre de lobes latéraux secondaires, de sorte qu'une cible rapprochée située dans la direction D2 de l'un de ces lobes secondaires, donc située hors de champ du radar de bord et donc invisible pour le pilote, pourra produire, si elle est proche, un signal plus intense qu'une cible éloignée qui serait située dans la direction D1 du lobe principal. Dans ce cas de figure, le pilote recevra la réponse de la cible située dans la direction D2, cible qu'il ne voit pas, et non celle de la cible située dans la direction D1, qui ne sera pas discriminée des autres cibles.

Cet inconvénient est moindre avec les systèmes à balayage, qui utilisent des antennes dites « intégrées » placées sur le même support que l'antenne du radar de bord et donc soumises au même balayage mécanique que celui-ci, ou bien qui utilisent directement l'antenne du radar de veille embarqué (technique dite « cross-bande ») l'interrogation étant alors réalisée dans une autre bande (bande X) que la veille IFF.

Ces deux dernières techniques sont cependant de moins en moins utilisées, la première dégradant les performances du radar et posant des problèmes mécaniques d'encombrement des antennes surajoutées à l'antenne du radar, et la seconde ne pouvant pas être mise en oeuvre par les radars récents à compression d'impulsions.

La seule autre technique de discrimination existante est une technique reposant sur l'utilisation d'un diagramme supplémentaire dit « diagramme de contrôle » ou « diagramme différence (Δ) » qui est un diagramme directif arrière tel que celui illustré en Δ sur la figure 1, et d'une série de trois impulsions codées successives P1, P2 et P3 de même amplitude.

Pour effectuer la discrimination, le système IFF va émettre les impulsions P1 et P3 (dites « d'interrogation » en utilisant le diagramme directionnel avant Σ (diagramme d'interrogation ou diagramme somme), et l'impulsion P2 (dite « de contrôle ») avec le diagramme directionnel arrière Δ (diagramme de contrôle ou diagramme différence).

Ainsi, dans le cas précité des deux cibles situées dans les directions D1 et D2 on recevra, pour la cible située dans la direction D1, des impulsions P1 et P3 de niveau supérieur à l'impulsion P2 (du fait que le diagramme Σ favorise la direction avant et que le diagramme Δ pénalise cette même direction avant) tandis que, pour la cible située dans la direction D2, ce sera le contraire.

Ainsi, en comparant le niveau de l'impulsion P2, telle que perçue par le diagramme Δ, à celui des impulsions P1 et P3, telles que perçues par le diagramme Σ, on pourra neutraliser l'effet des lobes secondaires du diagramme Σ. Généralement, on ne conserve que les signaux provenant de cibles pour lesquelles le niveau de P2 est inférieur d'au moins 9 dB à celui de P1 ou P3, ce qui correspond à un angle de discrimination donné autour de la direction D1.

Une telle technique de discrimination nécessite cependant de disposer, outre du diagramme omnidirectionnel V et du diagramme directionnel avant Σ, d'un troisième diagramme, à savoir le diagramme directionnel arrière Δ.

Sur un aéronef, ceci imposerait la mise en place de deux antennes (dos + ventre) supplémentaires, ou même de quatre antennes supplémentaires si l'on veut pouvoir appliquer cette technique aux deux normes Western et Eastern, portant ainsi le nombre total d'antennes à huit ou dix, respectivement.

Une telle multiplication des antennes est rédhibitoire sur un aéronef, ce qui fait que cette technique, pourtant très efficace, n'a jusqu'à présent été employée que dans les identifications sol/air, et très rarement dans les identifications air/air.

Un second but de l'invention est ainsi de permettre, sans augmenter le nombre d'antennes qui sera toujours de deux (dos + ventre), l'utilisation de cette technique à bord d'un aéronef, sans augmentation du nombre d'antennes et sans devoir recourir à une technique à balayage.

Pour atteindre les buts précités, l'invention a pour objet une antenne IFF aéroportée telle que définie par la revendication 1.

Avantageusement, la commutation des éléments parasites permet, pour ledit premier diagramme directif et/ou ledit second diagramme directif, d'obtenir sélectivement le diagramme directif avant correspondant :

. soit à une première norme IFF sur une première bande de fréquences,
. soit à une seconde norme IFF sur une seconde bande de fréquences distincte de la première.

Selon un certain nombre d'autres caractéristiques préférentielles :

- dans le cas où l'antenne est montée à l'intérieur d'un radôme et peut fonctionner sur deux gammes de fréquences distinctes, les éléments parasites comprennent au moins un élément parasite auxiliaire associé à l'élément primaire rayonnant et commuté de manière à rectifier sélectivement l'altération, due à l'effet de radôme dans au moins l'une des bandes de fréquences, du diagramme de rayonnement de cet élément primaire rayonnant ;

- toujours dans le cas où l'antenne peut fonctionner sur deux gammes de fréquences distinctes, l'un au moins des éléments parasites est un élément mixte accordé sur l'une et l'autre des deux bandes de fréquences ;

- les moyens de commutation comprennent, pour chacun des éléments parasites, une diode, montée entre un point de l'élément parasite et le potentiel de la masse et des moyens pour polariser sélectivement cette diode ;

- dans ce cas, le point de l'élément parasite auquel est reliée la diode est un point d'impédance minimale ; et - dans ce dernier cas, la diode est reliée au point le plus proche d'un plan de masse commun, et elle est enfermée dans une enceinte blindée s'étendant entre ce plan de masse et l'élément parasite.

On va maintenant décrire un exemple de réalisation de l'invention, en référence aux figures annexées.

La figure 1, précitée, montre les trois diagrammes V, Σ et Δ nécessaires, respectivement, pour la veille, l'identification et la discrimination IFF.

La figure 2 est une vue en élévation de l'antenne de l'invention, disposée à l'intérieur d'un radôme protecteur vu en coupe.

La figure 3 est une vue agrandie, en coupe, des moyens de commutation situés à la base des éléments parasites de l'antenne.

La figure 4 montre, en coordonnées cartésiennes, les trois diagramme V, $\Sigma$ et $\Delta$ relevés correspondant à l'antenne de l'invention.

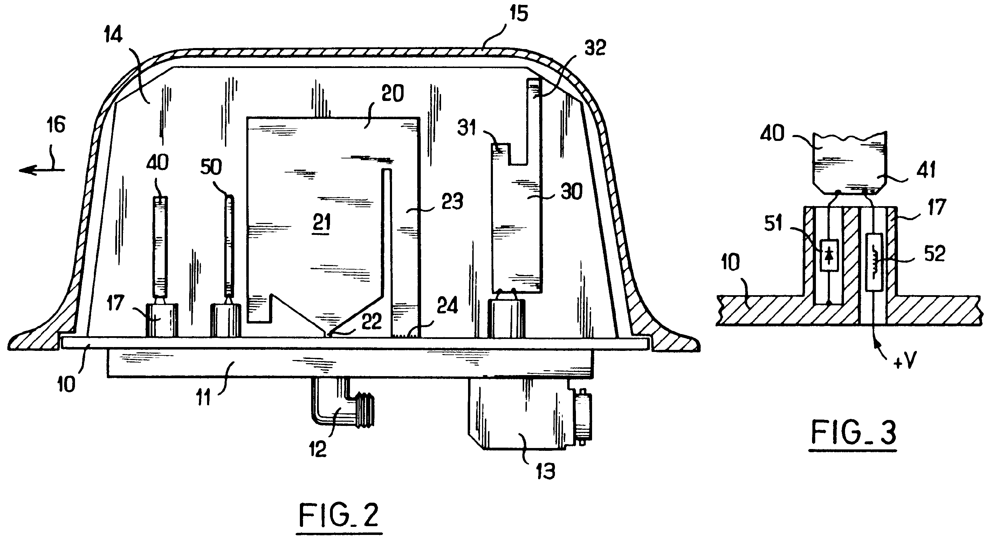

La figure 2 représente l'antenne de l'invention. Cette antenne est montée sur une plaque métallique 10 constituant, du point de vue mécanique, une semelle servant au montage de l'antenne et des éléments qui lui sont associés et formant, du point de vue radio-électrique, un plan de court-circuit (plan de masse).

Sous la semelle, un boîtier 11 enferme les différents circuits électroniques de commutation (dont on exposera plus bas le rôle) et porte un connecteur coaxial 12 recevant le signal à rayonner (ou délivrant le signal capté), et un connecteur 13 relié au faisceau de câbles envoyant les ordres de commutation entre les différents diagrammes.

La semelle 10, qui sera vissée sur une ouverture pratiquée dans le fuselage de l'aéronef, supporte une carte imprimée 14 en matériau isolant portant un certain nombre de métallisations constituant les éléments de l'antenne. L'ensemble est enfermé dans un radôme 15, transparent du point de vue radioélectrique, également fixé (vissé) sur le fuselage de l'aéronef. La réalisation de l'antenne sous forme plaquée (c'est-à-dire sous forme de métallisation sur carte imprimée) est particulièrement adaptée à une application aéroportée : gain en poids, en volume et en aérodynamisme, outre le gain en prix.

L'antenne de l'invention comporte essentiellement un élément rayonnant 20 formant source primaire, unique, auquel sont associés un certain nombre d'éléments rayonnants parasites 30, 40, 50 commutables sélectivement entre un état inerte et un état relié à la masse, selon les ordres envoyés au connecteur 13.

L'élément rayonnant 20 est un élément omnidirectionnel large bande, pour pouvoir fonctionner indifféremment sur les deux bandes Western et Eastern. Il est réalisé sous forme d'un monopôle replié comprenant une partie principale 21, large (typiquement de l'ordre de $\lambda/8$ à $\lambda/10$, $\lambda$ étant la longueur d'onde moyenne de fonctionnement) de sorte à être à large bande de fréquence ; la partie 21 est alimentée à sa base en 22 par le signal à rayonner et prolongée par une branche 23 repliée, reliée en 24 au plan de masse 10 (cette mise à la masse permet en outre d'éviter l'accumulation de charges statiques à la surface de l'élément).

A cet élément actif 20 est associé un élément parasite arrière ou réflecteur 30 et un élément parasite avant ou directeur 40 (la direction de l'avant est indiquée par la flèche 16).

Seul (c'est-à-dire lorsque les différents éléments parasites sont tous commutés dans un état inerte), l'élément rayonnant primaire 20 a un diagramme pratiquement omnidirectionnel permettant d'assurer la veille IFF, comme on peut le voir sur le relevé V de la figure 4 (tous les relevés de cette figure sont effectués à 1030 MHz).

Compte tenu de la large bande de cet élément rayonnant 20, l'omnidirectionnalité est assurée aussi bien sur la bande Western que sur la bande Eastern. Toutefois, pour compenser l'effet de radôme dû à la présence du matériau diélectrique 15 proche, et de son incidence différente dans l'une et l'autre des deux bandes, on prévoit un élément commutable additionnel 50 pour corriger cet effet de radôme dans l'une des bandes (ici, la bande Western) et améliorer ainsi l'omnidirectionnalité du diagramme dans cette bande.

Le réflecteur 30, qui sera commuté pour obtenir les diagrammes directifs dans les deux bandes, est un élément mixte constitué en fait de deux brins 31, 32 confondus à leur base et de longueurs différentes (le brin le plus court 31 correspondant à la bande Western et le brin le plus long 32 à la bande Eastern), ce qui évite de recourir à deux brins distincts commutés séparément.

Le directeur 40, quant à lui, est constitué d'un monopôle simple, tout comme le directeur 50.

Compte tenu de la longueur d'onde relativement importante dans la bande IFF (de l'ordre de 50 cm), incompatible avec la nécessaire compacité de l'antenne (dimensions hors-tout inférieure à 20 cm), les différents éléments de l'antenne ont été rapprochés. Ils sont donc très fortement couplés, et leurs dimensions ont été calculées en tenant compte de ce couplage.

Les éléments 30, 40 et 50 sont commutés sélectivement au moyen de diodes 51 les reliant ou non, selon la tension de commande +V appliquée, au plan de masse 10.

Le tableau I ci-dessous donne les différentes commutations à opérer pour obtenir les diagrammes voulus.

Tableau 1

| Diagramme | Réflecteur 30 | Directeur 40 | Directeur 50 |
|---|---|---|---|
| Omnidirectionnel (E & W) | 0 | 0 | 1 |
| Directif avant Eastern | 1 | 1 | 1 |
| Directif avant Western | 1 | 0 | 0 |
| Contrôle Western | 1 | 1 | 1 |

(1 = diode passante ; 0 = diode bloquée)

A propos du directeur 50 qui sert, comme on l'a expliqué plus haut, à compenser l'effet de radôme dans la bande Western, on a constaté que le fait que cet élément soit ou non commuté lorsque l'on fonctionne en bande Eastern était pratiquement sans incidence sur l'omnidirectionnalité du diagramme dans cette dernière bande. Aussi, pour réduire le nombre total de configurations de commutation, on prévoit de laisser toujours commuté ce directeur 50 dans le cas d'un diagramme omnidirectionnel, que ce dernier soit celui de la bande Western (où le directeur 50 a un effet réel sur le diagramme) ou de la bande Eastern (où ce directeur est sans effet).

On notera par ailleurs qu'il n'est pas prévu de diagramme de contrôle Eastern, la norme IFF Eastern ne prévoyant pas de transmettre les impulsions P1-P2-P3 permettant la discrimination par utilisation des deux diagrammes $\Sigma$ et $\Delta$.

Il serait cependant possible, éventuellement, d'obtenir sans difficulté les diagrammes correspondants nécessaires par des commutations supplémentaires appropriées.

La mise en oeuvre de l'invention a nécessité la résolution de plusieurs problèmes ayant trait à la commutation des différents éléments parasites.

Ces problèmes liés à la commutation sont multiples :

. La commutation doit tout d'abord être extrêmement rapide. En effet, lors de la réception des trois impulsions P1, P2 et P3, il faut passer très rapidement du diagramme $\Sigma$ (pour l'émission de l'impulsion P1) au diagramme $\Delta$ (pour l'émission de l'impulsion P2) puis à nouveau au diagramme $\Sigma$ (pour l'émission de l'impulsion P3). Typiquement, le changement de diagramme doit se faire en moins de 150 ns.

. En second lieu, la puissance commutée est élevée : en effet, la puissance crête en entrée de l'élément rayonnant 20 peut atteindre 1 kW. L'énergie accumulée dans les éléments parasites peut donc être importante, et, au moment de la mise à la masse de ceux-ci, la diode devra écouler à la masse une quantité de charges élevée, nuisant ainsi à la rapidité de la commutation.

. Les diodes, lorsqu'elles sont dans un état bloqué, ne doivent pas être débloquées par la haute fréquence apparaissant à leurs bornes (du fait du phénomène de détection de la tension haute fréquence).

. Enfin, sur les aéronefs, on rencontre très fréquemment une difficulté liée au fait que les antennes IFF et les antennes de communication UHF (bande décimétrique, généralement autour de 330 MHz) sont très proches, souvent de quelques dizaines de centimètres seulement. Il s'ensuit donc souvent des interférences entre l'harmonique deux (660 MHz) de l'émission UHF (330 MHz), qui tombe dans la bande IFF Eastern 600-700 MHz et peut, suivant les fréquences employées, perturber la réception IFF. Dans le cas de l'invention, la commutation des diagrammes doit chercher à minimiser ce problème et éviter que les non-linéarités, inhérentes à toute commutation, ne viennent générer des harmoniques deux.

Pour répondre à ces différentes contraintes, on choisit tout d'abord, pour la diode, une diode PIN rapide et à faible capacité en inverse.

Ensuite et surtout, pour tenir compte des impératifs de puissance, au lieu de situer la diode au centre de l'élément parasite, (ce qui serait la position idéale, car c'est là où, à l'état non commuté, l'élément serait le plus court possible, donc le plus inerte), on choisit de réaliser la coupure à la base (extrémité se trouvant près du plan de masse 10) de l'élément parasite, car c'est à cet endroit que l'impédance de l'élément parasite est la plus faible, et donc que la puissance est la plus faible.

Cette manière de procéder permet d'employer des diodes moins puissantes, donc plus rapide. Une fois la coupure de l'élément parasite située à sa base, on déterminera sa hauteur et sa distance par rapport à l'élément rayonnant principal 20 de manière que cet élément parasite soit inerte ou actif suivant l'état de la diode.

En ce qui concerne la génération d'harmoniques deux, cette génération dépend également de la position de la diode sur l'élément parasite. Ici encore, la position optimale est également l'endroit où l'élément parasite présente l'impédance la plus faible ; l'intérêt d'effectuer la commutation à la base est donc double.

Pour réduire encore la génération d'harmoniques, la diode est enfermée dans un blindage réuni à la masse, selon une configuration telle que celle illustrée figure 3 : la base 41 de l'élément parasite 40 (celui-ci n'a été pris qu'à titre d'exemple, la configuration étant la même pour les éléments parasites 30 et 50) est reliée au plan de masse 10 par la diode PIN 51 enfermée dans un logement tubulaire 17 formant blindage. Pour polariser cette diode, on applique la tension de commande +V à la base 41 de l'élément parasite par l'intermédiaire d'une inductance d'arrêt 52, elle-même enfermée dans le blindage 17.

## Revendications

1.  Antenne IFF aéroportée fixe, comportant :
    - un élément primaire rayonnant (20) ;
    - une pluralité d'éléments parasites (30, 40, 50) associés à cet élément primaire rayonnant, comportant au moins un élément arrière ou réflecteur (30) et un élément avant ou directeur (40), disposés respectivement en arrière et en avant de l'élément primaire ;

    l'antenne étant caractérisée par le fait que l'élément primaire est unique et formé par un monopole replié large bande, et que l'antenne comporte en outre des moyens de commutation (51, 52), connectés entre chacun des éléments parasites et la masse susceptibles sur commande de commuter chacun des éléments sélectivement entre un état inerte et un état relié à la masse, les caractéristiques électriques et géométriques de l'élément rayonnant et des éléments parasites et les commandes de commutation étant telles qu'elles modifient sélectivement le diagramme propre de l'élément primaire rayonnant de manière à obtenir au moins :
    .  soit un diagramme omnidirectionnel (V) correspondant au diagramme du mode de veille IFF pour lequel le réflecteur et le directeur sont commutés dans l'état inerte,
    .  soit un premier diagramme directif correspondant au diagramme directif avant ($\Sigma$) en mode d'interrogation IFF selon une première norme IFF sur une première bande de fréquences,
    .  soit un deuxième diagramme directif correspondant au diagramme directif avant en mode d'interrogation IFF selon une deuxième norme IFF sur une deuxième bande de fréquences distincte de la première,
    .  soit un troisième diagramme directif correspondant au diagramme de contrôle ($\Delta$) en mode d'interrogation IFF selon la première norme IFF.

2.  Antenne selon la revendication 1, caractérisée en ce que l'élément réflecteur (30) comporte deux brins (31, 32) correspondant respectivement aux première et deuxième normes IFF.

3.  Antenne selon l'une des revendications précédentes, caractérisée en ce que, l'antenne étant montée à l'intérieur d'un radôme (15), les éléments parasites comprennent en outre un élément parasite auxiliaire (50) associé à l'élément primaire rayonnant et commuté de manière à rectifier sélectivement l'altération, due à l'effet de radôme, dans au moins l'une des bandes de fréquences, du diagramme de rayonnement de cet élément primaire rayonnant.

4.  Antenne selon les revendications 1 et 3, caractérisée en ce que la configuration de commutation des éléments parasites est donnée par la table de vérité suivante :

| Diagramme | Elément réflecteur (30) | Elément directeur (40) | Elément auxiliaire (50) |
|---|---|---|---|
| Omnidirectionnel | 0 | 0 | 1 |
| Directif avant première norme | 1 | 0 | 0 |
| Directif avant seconde norme | 1 | 1 | 1 |
| Contrôle première norme | 1 | 1 | 1 |

où 1 = état relié à la masse; 0 = état inerte

5. Antenne selon l'une des revendications précédentes, caractérisée en ce que les moyens de commutation comprennent, pour chacun des éléments parasites :
- une diode (51), montée entre un point (41) de l'élément parasite et le potentiel de la masse, et
- des moyens (52, +V) pour polariser sélectivement cette diode.

6. Antenne selon la revendication 5, caractérisée en ce que le point (41) de l'élément parasite auquel est reliée la diode est un point d'impédance minimale.

7. Antenne selon la revendication 6, caractérisée en ce que la diode est reliée au point (41) de l'élément parasite (40) le plus proche d'un plan de masse (10) commun, et en ce qu'elle est enfermée dans une enceinte blindée (17) s'étendant entre ce plan de masse et l'élément parasite.

8. Antenne selon l'une des revendications précédentes, caractérisée en ce que l'élément primaire et les éléments parasites sont formés par des métallisations déposées sur une carte imprimée.

**Patentansprüche**

1. Auf einem Flugzeug montierte feste IFF-Antenne
- mit einem strahlenden Primärelement (20),
- und einer Mehrzahl von passiven Elementen (30, 40, 50), die dem strahlenden Primärelement zugeordnet sind und mindestens ein rückwärtiges Reflektorelement (30) und ein vorderes Direktorelement (40) enthalten, die hinter bzw. vor dem Primärelement liegen, dadurch gekennzeichnet, daß nur ein Primärelement vorgesehen ist, das aus einem breitbandigen umgebogenen Monopol besteht, und daß die Antenne weiter Schaltmittel (51, 52) enthält, die zwischen je eines der passiven Elemente und Masse eingefügt sind, und auf Wunsch jedes der Elemente selektiv in einen inerten Zustand und einen geerdeten Zustand umschalten können, wobei die elektrischen und geometrischen Kennwerte des strahlenden und der passiven Elemente und die Schaltsteuerungen so gewählt sind, daß das Eigendiagramm des strahlenden Primärelements so selektiv geändert wird, daß sich mindestens ergibt:
- ein rundum wirkendes Diagramm (V) entsprechend dem IFF-Wachtmodus, für den der Reflektor und der Direktor sich im inerten Zustand befinden,
- ein erstes Richtdiagramm entsprechend dem vorderen Richtdiagramm (Σ) im TFF-Abfragemodus gemäß einer ersten IFF-Norm in einem ersten Frequenzband,
- ein zweites Richtdiagramm entsprechend dem vorderen Richtdiagramm im IFF-Abfragemodus gemäß einer zweiten IFF-Norm in einem zweiten Frequenzband, das sich vom ersten Frequenzband unterscheidet,

- ein drittes Richtdiagramm entsprechend dem Kontrolldiagramm (Δ) im TFF-Abfragemodus gemäß der ersten IFF-Norm.

2. Antenne nach Anspruch 1, dadurch gekennzeichnet, daß das Reflektorelement (30) zwei Stäbe (31, 32) besitzt, die der ersten bzw. zweiten IFF-Norm entsprechen.

3. Antenne nach einem der vorhergehenden Ansprüche, dadurch gekennzeichnet, daß die Antenne unter einer Schutzhaube (15) montiert ist und die passiven Elemente außerdem ein passives Hilfselement (50) aufweisen, das dem strahlenden Primärelement zugeordnet und so eingeschaltet wird, daß das aufgrund der Haube veränderte Strahlungsdiagramm dieses strahlenden Primärelements in mindestens einem der Frequenzbänder korrigiert wird.

4. Antenne nach den Ansprüchen 1 und 3, dadurch gekennzeichnet, daß die Schaltkonfiguration der passiven Elemente durch die nachfolgende Tabelle bestimmt ist:

| Diagramm | Reflektor 30 | Direktor 40 | Direktor 50 |
|---|---|---|---|
| rundum wirksam | 0 | 0 | 1 |
| Richtwirkung nach vorne (erste Norm) | 1 | 0 | 0 |
| Richtwirkung nach vorne (zweite Norm) | 1 | 1 | 1 |
| Kontrolle (erste Norm) | 1 | 1 | 1 |

wobei 1 bedeutet "Diode leitet" und 0 bedeutet "Diode sperrt".

5. Antenne nach einem der vorhergehenden Ansprüche, dadurch gekennzeichnet, daß die Schaltmittel für jedes der passiven Elemente
   - eine Diode (51), die zwischen einem Punkt (41) des passiven Elements und Massepotential liegt,
   - und Mittel (52, +V) aufweisen, um diese Diode selektiv vorzuspannen.

6. Antenne nach Anspruch 5, dadurch gekennzeichnet, daß der Punkt (41) des passiven Elements, an den die Diode angeschlossen ist, ein Punkt minimaler Impedanz ist.

7. Antenne nach Anspruch 6, dadurch gekennzeichnet, daß die Diode in einem der gemeinsamen Masseebene (10) möglichst nahen Punkt (41) des passiven Elements (40) angeschlossen ist und daß diese Diode in einem abgeschirmten Gehäuse (17) untergebracht ist, das sich zwischen dieser Masseebene und dem passiven Element befindet.

8. Antenne nach einem der vorhergehenden Ansprüche, dadurch gekennzeichnet, daß das Primärelement und die passiven Elemente durch Metallbeschichtungen gebildet werden, die auf eine Druckkarte aufgebracht sind.

## Claims

1. Fixed airborne IFF antenna, comprising:
   - a primary radiating element (20);
   - a plurality of parasitic elements (30, 40, 50) associated with this primary radiating element, comprising at least one aft or reflector element (30) and one fore or director element (40), arranged aft and fore of the primary element respectively;
   the antenna being characterized in that the primary element is single and formed by a wide-band folded monopole, and in that the antenna furthermore comprises switching means (51, 52) connected between each of the parasitic elements and earth, which are able on command to switch each of the elements selectively between an inert state and an earthed state, the electrical and geometric characteristics of the radiating element and of the parasitic elements and the switching commands being such that they selectively modify the characteristic pattern of the primary radiating element so as to obtain at least:

. either an omnidirectional pattern (V) corresponding to the pattern of the IFF surveillance mode for which the reflector and the director are switched to the insert state,

. or a first directional pattern corresponding to the fore directional pattern (Σ) in IFF interrogation mode in accordance with a first IFF standard on a first frequency band,

. or a second directional pattern corresponding to the fore directional pattern in IFF interrogation mode in accordance with a second IFF standard on a second frequency band different from the first,

. or a third directional pattern corresponding to the monitoring pattern (Δ) in IFF interrogation mode in accordance with the first IFF standard.

2. Antenna according to Claim 1, characterized in that the reflector element (30) comprises two wires (31, 32) corresponding to the first and second IFF standards respectively.

3. Antenna according to one of the preceding claims, characterized in that, the antenna being mounted inside a radome (15), the parasitic elements further comprise an auxiliary parasitic element (50) associated with the primary radiating element and switched so as to selectively correct the degradation, due to the radome effect, in at least one of the frequency bands, of the radiation pattern of this primary radiating element.

4. Antenna according to Claims 1 and 3, characterized in that the configuration for switching the parasitic elements is given by the following truth table:

| Pattern | Reflector element (30) | Director element (40) | Auxiliary element (50) |
|---|---|---|---|
| Omnidirectional | 0 | 0 | 1 |
| Fore first standard directional | 1 | 0 | 0 |
| Fore second standard directional | 1 | 1 | 1 |
| First standard monitoring | 1 | 1 | 1 |

where 1 = earthed state; 0 = inert state.

5. Antenna according to one of the preceding claims, characterized in that the switching means comprise, for each of the parasitic elements:

- a diode (51) mounted between a point (41) of the parasitic element and the earth potential, and
- means (52, +V) for selectively biasing this diode.

6. Antenna according to Claim 5, characterized in that the point (41) of the parasitic element to which the diode is connected is a point of minimum impedance.

7. Antenna according to Claim 6, characterized in that the diode is connected to the point (41) of the parasitic element (40) closest to a common earth plane (10), and in that the diode is enclosed in a screened enclosure (17) extending between this earth plane and the parasitic element.

8. Antenna according to one of the preceding claims, characterized in that the primary element and the parasitic elements are formed by metallizations deposited on a printed board.

EP 0 457 880 B1

FIG_1

FIG_4

10

FIG.2

FIG.3

EP 0 457 880 B1